# EUROPÄISCHE PATENTSCHRIFT

(11) **EP 3 626 785 B1**
(45) Veröffentlichungstag und Bekanntmachung des Hinweises auf die Patenterteilung: **07.07.2021**
(21) Anmeldenummer: 18195619.4
(22) Anmeldetag: 20.09.2018
(51) Int. Cl.: C09D 5/00

(54) **METALLPASTE UND DEREN VERWENDUNG ZUM VERBINDEN VON BAUELEMENTEN**
METAL PASTE AND ITS USE FOR JOINING COMPONENTS
PÂTE MÉTALLIQUE ET SON UTILISATION PERMETTANT DE RACCORDER DES COMPOSANTS

(43) Veröffentlichungstag der Anmeldung: 25.03.2020
(73) Patentinhaber: Heraeus Deutschland GmbH & Co KG, 63450 Hanau (DE)
(72) Erfinder: Schwarzer, Christian, 63450 Hanau (DE); Schmitt, Wolfgang, 63450 Hanau (DE)
(74) Vertreter: Heraeus IP

(56) Entgegenhaltungen:
- EP-A1- 3 009 211
- WO-A1-2015/162405
- JP-A- 2005 133 119

## Beschreibung

Die vorliegende Erfindung betrifft eine Metallpaste und ein Verfahren zum Verbinden von Bauelementen, bei dem diese Metallpaste als Sinterverbindungsmaterial eingesetzt wird.

Die Sintertechnik stellt ein einfaches Verfahren zum stabilen Verbinden von Bauelementen dar, beispielsweise im Bereich der Leistungs- und Konsumerelektronik. Dabei haben sich Metallpasten in Form von Silberpasten als Sinterverbindungsmaterial bewährt und allgemein durchgesetzt, obwohl Kupferpasten auch schon als als Sinterverbindungsmaterial verwendbar beschrieben worden sind.

EP3009211A1 offenbart Metallpasten, die Kupfer- und/oder Silberpartikel, die ein Coating aufweisen, das wenigstens eine organische Verbindung enthält, organisches Lösemittel und Molybdän- und/oder Nickelkern-Silbermantel-Partikel enthalten. Unter anderem sind damit Metallpasten offenbart, welche organisch gecoatete Kupferflakes enthalten können. Das organische Coating kann Fettsäure umfassen. Die Metallpasten sind als Sinterverbindungsmaterial zum Verbinden von Elektronikbauteilen verwendbar.

JP2005133119A offenbart mit zwei Schichten versehene Metallpulver und damit formulierbare elektrisch leitfähige Pasten. Das Metallpulver kann Kupferpulver sein. Kupferpartikel in Flakeform werden nicht erwähnt. Die innere Schicht ist eine organische Beschichtung, welche eine Fettsäure sein kann. Die zweite darauf befindliche äußere Schicht besteht aus einem anorganischen Oxid ausgewählt unter Siliziumoxid, Aluminiumoxid, Magnesiumoxid, Zirkoniumoxid, Titanoxid und Zinkoxid.

WO2015/162405A1 offenbart unter anderem Metallpasten, welche organisch gecoatete Kupferflakes enthalten können. Das organische Coating kann Fettsäure umfassen. Die BET-Oberfläche der Metallpartikel soll vorteilhafterweise möglichst klein sein, beispielsweise < 1.5 m²/g, bevorzugt < 1 m²/g, mehr bevorzugt < 0.8 m²/g.

Die Metallpasten sind als Sinterverbindungsmaterial zum Verbinden von Elektronikbauteilen verwendbar.

Aufgabe der Erfindung ist die Bereitstellung einer als Sinterverbindungsmaterial verwendbaren Kupferpaste mit einem ausgewogenen, Kundenanforderungen erfüllenden Eigenschaftsspektrum.

Der Anmelderin ist es mit der vorliegenden Erfindung gelungen, eine rundum praxistaugliche Kupferpaste für Sinterverbindungsanwendungen bereitzustellen.

Die Erfindung betrifft eine Metallpaste, umfassend (A) 65 bis 85 Gew.-% (Gewichts-%) Metallpartikel und (B) 10 bis 35 Gew.-% organisches Lösemittel, wobei die Metallpartikel (A) zu 70 bis 100 Gew.-% aus organisch gecoateten Kupferflakes mit einer spezifischen Oberfläche im Bereich von 1,9 bis 3,7 m²/g, einem Gesamtsauerstoffgehalt im Bereich von 2 bis 4 Gew.-% und einem Gesamtkohlenstoff : Gesamtsauerstoff-Gewichtsverhältnis im Bereich von 0,25 bis 0,9 bestehen.

Die erfindungsgemäße Metallpaste enthält als Bestandteil (A) 65 bis 85 Gew.-%, vorzugsweise 70 bis 80 Gew.-%, mehr bevorzugt 72 bis 78 Gew.-% Metallpartikel.

Die Metallpartikel (A) bestehen zu 70 und mehr Gew.-%, bevorzugt zu 80 und mehr Gew.-%, mehr bevorzugt zu 90 und mehr Gew.-%, am meisten bevorzugt zu 95 und mehr Gew.-% und insbesondere zu 100 Gew.-% aus organisch gecoateten Kupferflakes mit einer spezifischen Oberfläche im Bereich von 1,9 bis 3,7 m²/g, einem Gesamtsauerstoffgehalt im Bereich von 2 bis 4 Gew.-% und einem Gesamtkohlenstoff : Gesamtsauerstoff-Gewichtsverhältnis im Bereich von 0,25 bis 0,9.

Besagte Kupferflakes zeichnen sich durch eine Kombination folgender Merkmale aus:
- Material: Kupfer respektive Kupferlegierung mit bis zu 30 Gew.-% wenigstens eines Legierungsmetalls,
- Teilchenform: Flakes,
- Spezifische Oberfläche im Bereich von 1,9 bis 3,7 m²/g,
- Organisches Coating,
- Gesamtsauerstoffgehalt: im Bereich von 2 bis 4 Gew.-%, bevorzugt von 2,5 bis 4 Gew.-%,
- Gesamtkohlenstoff : Gesamtsauerstoff-Gewichtsverhältnis im Bereich von 0,25 bis 0,9, bevorzugt von 0,25 bis 0,5.

Der in der Beschreibung und den Ansprüchen verwendete Begriff "Flakes" bedeutet Partikel, die die Form von beispielsweise 40 bis 200 nm dünnen Plättchen aufweisen. Flakes im Sinne der Erfindung weisen ein Aspektverhältnis beispielsweise im Bereich von ≥ 6 : 1 bis zu 375 : 1 auf.

Der hierin verwendete Begriff "Aspektverhältnis" bezieht sich auf die Form von Partikeln und bedeutet den Quotienten aus der größten und der kleinsten Längenausdehnung eines Teilchens. Er kann bestimmt werden durch Auswertung mikroskopischer Bilder im Sinne einer Vermessung der Dimensionen einer statistisch sinnvollen Anzahl von beispielsweise 2500 bis 3000 individuellen Teilchen. Beispielsweise kann dazu ein optisches Mikroskop bei 2000- bis 5000-facher Vergrößerung gekoppelt mit einem automatischen Bildanalyse-System verwendet werden.

Die in m²/g ausgedrückte spezifische Oberfläche der organisch gecoateten Kupferflakes kann mittels BET-Messung gemäß DIN ISO 9277 : 2014-01 (gemäß Kapitel 6.3.1, statisch-volumetrisches Messverfahren, verwendetes Gas: Stickstoff) bestimmt werden.

Die organisch gecoateten Kupferflakes können eine mittlere Teilchengröße (d50) beispielsweise im Bereich von 1 bis 15 µm aufweisen. Der Begriff "mittlere Teilchengröße" bedeutet den mittels Laserbeugung bestimmbaren mittleren Teilchendurchmesser (d50). Laserbeugungsmessungen können mit einem entsprechenden Teilchengrößenmessgerät, beispielsweise einem Mastersizer 3000 von Malvern Instruments durchgeführt werden.

Bevorzugt handelt es sich bei den organisch gecoateten Kupferflakes um eine einheitliche Art. Es kann sich aber auch um eine Kombination mehrerer Arten solcher organisch gecoateter Kupferflakes handeln, wobei jedoch jede einzelne Art die vorerwähnte erfindungswesentliche Merkmalskombination erfüllt.

Besagte Kupferflakes sind organisch gecoatet. Das organische Coating bildet eine festhaftende und bei Normalbedingungen (20°C, Atmosphärendruck) nichtflüchtige Schicht auf der Kupferflakeoberfläche. Es umfasst wenigstens eine Art von organischen Coatingverbindungen. Im Allgemeinen tragen die organischen Coatingverbindungen wenigstens eine funktionelle Gruppe. Als funktionelle Gruppen kommen insbesondere Carbonsäuregruppen, Carboxylatgruppen, Estergruppen, Ketogruppen, Aldehydgruppen, Aminogruppen, Amidgruppen, Azogruppen, Imidgruppen oder Nitrilgruppen in Betracht. Bevorzugte funktionelle Gruppen sind Aminogruppen, Aldehydgruppen, Carbonsäuregruppen, Carboxylat- und Carbonsäureestergruppen. Bei den organischen Coatingverbindungen mit wenigstens einer funktionellen Gruppe handelt es sich vorzugsweise um gesättigte, einfach ungesättigte oder mehrfach ungesättigte organische Verbindungen. Die organischen Coatingverbindungen mit wenigstens einer funktionellen Gruppe können ferner verzweigt oder unverzweigt sein. Vorzugsweise kommen als organische Coatingverbindungen Fettamine, Fettaldehyde, Fettsäuren, Fettsäuresalze oder Fettsäureester, vorzugsweise jeweils unverzweigt und vorzugsweise jeweils gesättigt. Gemäß einer bevorzugten Ausführungsform handelt es sich um Verbindungen mit 8 bis 24, mehr bevorzugt 8 bis 18 Kohlenstoffatomen im Fettalkyl- bzw. Fettacylrest.

Bevorzugte organische Coatingverbindungen sind Alkylamine mit 8 bis 18 C-Atomen, C12-C18-Aldehyde, Caprylsäure (Octansäure), Caprinsäure (Decansäure), Laurinsäure (Dodecansäure), Myristinsäure (Tetradecansäure), Palmitinsäure (Hexadecansäure), Margarinsäure (Heptadecansäure), Stearinsäure (Octadecansäure), Arachinsäure (Eicosansäure/Icosansäure), Behensäure (Docosansäure), Lignocerinsäure (Tetracosansäure) sowie entsprechende Ester, und Salze dieser Säuren.

Besonders bevorzugte organische Coatingverbindungen sind Dodecansäure, Octadecansäure, Aluminiumstearat, Kupferstearat, Natriumstearat, Kaliumstearat, Natriumpalmitat und Kaliumpalmitat.

Der Anteil des organischen Coatings kann beispielsweise im Bereich von 2 bis 5 Gew.-%, bezogen auf das Gewicht der organisch gecoateten Kupferflakes, betragen.

Der Coatinggrad, d.h. das Verhältnis des Gewichts des organischen Coatings zur spezifischen Oberfläche der organisch gecoateten Kupferflakes, kann beispielsweise 0,004 bis 0,006 g/m² betragen.

Der Gesamtsauerstoffgehalt der organisch gecoateten Kupferflakes liegt im Bereich von 2 bis 4 Gew.-%, bevorzugt von 2,5 bis 4 Gew.-%, und ihr Gesamtkohlenstoff : Gesamtsauerstoff-Gewichtsverhältnis liegt im Bereich von 0,25 bis 0,9, bevorzugt von 0,25 bis 0,5. Gesamtkohlenstoff und Gesamtsauerstoff beziehen sich auf die organisch gecoateten Kupferflakes; d.h. der Gesamtkohlenstoff wird gebildet aus dem Kohlenstoffbeitrag des organischen Coatings als auch aus einem möglichen den Kupferflakes als solchen entstammenden Kohlenstoffbeitrag, während sich der Gesamtsauerstoff aus einem möglichen Sauerstoffbeitrag des organischen Coatings als auch aus einem Sauerstoffbeitrag aus den Kupferflakes selber (Kupferoxid) zusammensetzt.

Die Herstellung organisch gecoateter Kupferflakes ist dem Fachmann als Lehrbuchwissen bekannt. Die Herstellung kann erfolgen durch Verdüsung von flüssigem (geschmolzenem) Kupfer bzw. flüssiger (geschmolzener) Kupferlegierung in eine 18 bis 21 Vol.-% Sauerstoff enthaltende Atmosphäre hinein, beispielsweise in Luft, gefolgt von einem anschließenden Vermahlen der so erhaltenen an der Partikeloberfläche oxidierten Kupfer(legierungs)partikel in Gegenwart der organischen Coatingverbindung(en). Bei dem Vermahlen handelt es sich insbesondere um ein Kaltumformen in einem Trockenmahl-Prozess z.B. im Hametag-Verfahren. Dabei wird in einer Mühle mit Hilfe von Mahlwerkzeugen unter Zugabe der organischen Coatingverbindung(en) gearbeitet. Zum Vermahlen eignen sich beispielsweise Kugelmühlen, bevorzugt unter Verwendung von Stahlkugeln als Mahlwerkzeug. Die während des Vermahlens zu Flakes verformten und organisch gecoateten Kupfer(legierungs)partikel können nach dem Vermahlen klassiert werden, beispielsweise mit Hilfe von Zyklonen im Luftstrom nach dem Schwerkraft- und Fliehkraftprinzip.

Falls die Metallpartikel (A) nicht zu 100 Gew.-% aus besagten Kupferflakes bestehen, so kann der den Rest zu 100 Gew.-% der Metallpartikel (A) ausmachende Teil aus mindestens einer Art von Metallpartikeln ausgewählt aus der Gruppe bestehend aus andersartigen Kupferpartikeln und Partikeln aus anderen Metallen als Kupfer bestehen.

Beispiele für andersartige Kupferpartikel sind solche, die sich in mindestens einem Merkmal von besagten Kupferflakes unterscheiden.

Beispiele für Partikel aus anderen Metallen als Kupfer sind insbesondere solche aus Silber, Palladium, Gold und Nickel. Gegebenenfalls in der erfindungsgemäßen Metallpaste enthaltene Partikel aus anderen Metallen als Kupfer haben bevorzugt ebenfalls Flakeform und sind bevorzugt auch organisch gecoatet.

In der vorliegenden Patentanmeldung ist von Metallpartikeln die Rede. Es kann sich dabei um Partikel aus dem reinen betreffenden Metall (Reinheit beispielsweise wenigstens 99,9 Gew.-%) handeln. Es kann sich aber auch um Partikel aus Legierungen des betreffenden Metalls mit beispielsweise bis zu 30 Gew.-% mindestens eines anderen Legierungsmetalls handeln. So können besagte Kupferflakes Flakes aus reinem Kupfer respektive Flakes aus Legierungen von Kupfer mit einem oder mehreren Legierungsmetallen beispielweise ausgewählt aus Silber, Gold, Nickel, Palladium, Platin, Zink und Aluminium umfassen.

Die erfindungsgemäße Metallpaste enthält als Bestandteil (B) 10 bis 35 Gew.-%, vorzugsweise 15 bis 30 Gew.-%, mehr bevorzugt 17 bis 28 Gew.-% und noch mehr bevorzugt 20 bis 25 Gew.-% organisches Lösemittel, d.h. ein organisches Lösemittel oder ein Gemisch mindestens zweier organischer Lösemittel.

Bei dem oder den organischen Lösemitteln (B) handelt es sich um für Metallpasten üblicherweise verwendete organische Lösemittel. Beispiele sind Terpineole, Ethylenglykol, Dimethylacetamid, 1-Tridecanol, 2-Tridecanol, 3-Tridecanol, 4-Tridecanol, 5-Tridecanol, 6-Tridecanol, Isotridecanol, mit Ausnahme einer Methylsubsitution am vorletzten C-Atom unsubstituierte 1-Hydroxy-C16-C20-alkane wie 16-Methylheptadecan-1-ol, dibasische Ester (vorzugsweise Dimethylester der Glutar-, Adipin- oder Bernsteinsäure oder Mischungen davon), Glycerin, Diethylenglykol, Triethylenglykol und aliphatische, insbesondere gesättigte aliphatische Kohlenwasserstoffe mit 5 bis 32 C-Atomen, mehr bevorzugt 10 bis 25 C-Atomen und noch mehr bevorzugt 16 bis 20 C-Atomen. Solche aliphatischen Kohlenwasserstoffe werden beispielsweise von Exxon Mobil unter der Marke Exxsol™ D140 oder unter der Marke Isopar M™ vertrieben.

Die erfindungsgemäße Metallpaste kann als Bestandteil (C) 0 bis 15 Gew.-% mindestens eines Additivs enthalten. Beispiele für Additive (C) umfassen Metallprecursoren, Sinterhilfsmittel, Dispergiermittel, Tenside, Entschäumer, Bindemittel, Polymere wie Cellulosederivate, beispielsweise Methylcellulose, Ethylcellulose, Ethylmethylcellulose, Carboxycellulose, Hydroxypropylcellulose, Hydroxyethylcellulose, Hydroxymethylcellulose, und viskositätssteuernde Mittel.

Die Summe der Gew.-% der Bestandteile (A) und (B) oder, falls ein Bestandteil vom Typ (C) enthalten ist, der Bestandteile (A) bis (C) beträgt 100 Gew.-%, bezogen auf die erfindungsgemäße Metallpaste, d.h. vor ihrer Applikation. Dementsprechend kann die Herstellung der erfindungsgemäßen Metallpaste durch Vermischen der Bestandteile (A) und (B) oder (A) bis (C) erfolgen.

Die erfindungsgemäße Metallpaste hat naturgemäß einen Preisvorteil gegenüber einer Silberpaste. Die mit der erfindungsgemäßen Metallpaste herstellbaren Sinterverbindungen erfüllen Kundenanforderungen. Besonders vorteilhaft ist die Verwendung der erfindungsgemäßen Metallpaste bei der Herstellung von Sinterverbindungen zwischen Bauelementen, genauer gesagt, zwischen Kontaktflächen von Bauelementen, wovon mindestens eines eine sinterzuverbindende Kontaktfläche aus Kupfer oder aus metallisiertem Kupfer besitzt. Hier beobachtet man keine oder nur geringe thermomechanische Spannungen zwischen Kontaktfläche respektive Kontaktflächen und Sinterverbindung respektive zwischen den Kontaktflächen der Bauelemente. Korrosionsbildung der Kupferkontaktflächen wird nicht oder nur in geringem Umfang beobachtet.

Die erfindungsgemäße Metallpaste kann insbesondere als Sinterverbindungsmaterial, genauer als Sinterpaste, d.h. in einem Sinterverfahren eingesetzt werden. Unter Sintern wird das Verbinden von zwei oder mehr Bauelementen durch Erhitzen unter Vermeidung dessen, dass die Metallpartikel (A) die flüssige Phase erreichen, verstanden.

Das unter Verwendung der erfindungsgemäßen Metallpaste durchgeführte Sinterverfahren kann unter Anwendung von Pressdruck oder drucklos durchgeführt werden.

Unter dem Verbinden von wenigstens zwei Bauelementen wird das Befestigen von einem ersten Bauelement auf einem zweiten Bauelement verstanden. In diesem Zusammenhang bedeutet "auf" lediglich, dass eine Oberfläche des ersten Bauelements mit einer Oberfläche des zweiten Bauelements verbunden wird, wobei es auf die relative Lage der beiden Bauelemente oder der Anordnung, die die wenigstens zwei Bauelemente enthält, nicht ankommt.

Im Rahmen der Erfindung soll der Begriff "Bauelement" vorzugsweise Einzelteile umfassen. Diese Einzelteile sind vorzugsweise nicht weiter zerlegbar.

Der hierin verwendete Begriff "Bauelement" bezeichnet insbesondere Bauteile, die in der Elektronik verwendet werden, kurz gesagt, elektronische Bauelemente. Beispiele dafür umfassen Dioden, LEDs (light emitting diodes, lichtemittierende Dioden), Dies, IGBTs (insulated-gate bipolar transistors, Bipolartransistoren mit isolierter Gate-Elektrode), MOSFETs (Metall-Oxid-Halbleiter-Feldeffekttransistoren), ICs (integrated circuits, integrierte Schaltungen), Sensoren, Kühlkörper, Widerstände, Kondensatoren, Spulen, Verbindungselemente (z. B. Clips), Bodenplatten, Antennen, Leadframes, PCBs (printed circuit boards, gedruckte Leiterplatten), flexible Elektronik, Keramiksubstrate, Metallkeramiksubstrate wie beispielsweise DCB-Substrate (direct copper bonded-Substrate), IMS (isoliertes Metallsubstrat) und dergleichen.

Die zu verbindenden Bauelemente können gleichartige oder verschiedenartige Bauelemente sein.

Das oder die Bauelemente können - soweit sie nicht ohnehin aus Metall bestehen - wenigstens eine Metallkontaktfläche, beispielsweise in Form einer Metallisierungsschicht, umfassen, worüber eine Sandwichanordnung erfolgt. Diese Metallisierungsschicht ist vorzugsweise Teil des oder der Bauelemente. Die Metallisierungsschicht befindet sich vorzugsweise an wenigstens einer Oberfläche des oder der Bauelemente.

Bevorzugt wird die Verbindung der Bauelemente mittels der erfindungsgemäßen Metallpaste über besagte Metallkontaktfläche(n) oder Metallisierungsschicht(en) vorgenommen.

Die Metallisierungsschicht kann reines Metall oder eine Metalllegierung aufweisen. Es kann bevorzugt sein, wenn die Metallisierungsschicht wenigstens 50 Gew.-%, mehr bevorzugt wenigstens 70 Gew.-%, noch mehr bevorzugt wenigstens 90 Gew.-% oder aber 100 Gew.-% an reinem Metall aufweist. Das reine Metall ist beispielsweise aus der Gruppe ausgewählt, die aus Kupfer, Silber, Gold, Palladium und Platin besteht.

Die Erfindung betrifft auch ein Verfahren zur Verbindung wenigstens zweier Bauelemente durch Sintern.

Dazu werden zunächst die zwei oder mehr Bauelemente miteinander in Kontakt gebracht. Das Kontaktieren erfolgt dabei über die erfindungsgemäße Metallpaste. Zu diesem Zweck wird eine Anordnung bereitgestellt, bei der sich zwischen jeweils zwei der wenigstens zwei Bauelemente, genauer zwischen deren Metallkontaktflächen oder Metallisierungsschichten erfindungsgemäße Metallpaste befindet.

Sollen daher zwei Bauelemente, Bauelement 1 und Bauelement 2, miteinander verbunden werden, so befindet sich die erfindungsgemäße Metallpaste vor dem Sintern zwischen Bauelement 1 und Bauelement 2. Andererseits ist es denkbar, dass mehr als zwei Bauelemente miteinander verbunden werden. Beispielsweise können drei Bauelemente, Bauelement 1, Bauelement 2 und Bauelement 3 auf eine Weise miteinander verbunden werden, dass Bauelement 2 zwischen Bauelement 1 und Bauelement 3 liegt. In diesem Fall befindet sich die erfindungsgemäße Metallpaste sowohl zwischen Bauelement 1 und Bauelement 2 als auch zwischen Bauelement 2 und Bauelement 3.

Die einzelnen Bauelemente liegen in einer Sandwichanordnung vor und werden miteinander verbunden. Unter Sandwichanordnung ist eine Anordnung zu verstehen, bei der sich zwei Bauelemente übereinander befinden und die Bauelemente im Wesentlichen parallel zueinander angeordnet sind.

Die Anordnung aus wenigstens zwei Bauelementen und erfindungsgemäßer Metallpaste, wobei sich die Metallpaste zwischen zwei Bauelementen dieser Anordnung befindet, kann nach einem aus dem Stand der Technik bekannten Verfahren hergestellt werden.

Vorzugsweise wird zunächst wenigstens eine Kontaktfläche eines Bauelements 1 mit der erfindungsgemäßen Metallpaste versehen. Anschließend wird ein anderes Bauelement 2 mit der oder einer seiner Kontaktflächen auf die Metallpaste, die auf die Kontaktfläche des Bauelements 1 aufgetragen worden ist, aufgesetzt.

Die Auftragung der erfindungsgemäßen Metallpaste auf die Kontaktfläche eines Bauelements kann mittels herkömmlicher Verfahren erfolgen, beispielsweise mittels Druckverfahren wie Siebdruck oder Schablonendruck. Andererseits kann die Auftragung der erfindungsgemäßen Metallpaste auch mittels Dispenstechnik, mittels Pintransfer oder durch Dippen erfolgen.

Im Anschluss an die Auftragung der erfindungsgemäßen Metallpaste wird vorzugsweise die mit der Metallpaste versehene Kontaktfläche dieses Bauelements mit einer Kontaktfläche des damit zu verbindenden Bauelements über die Metallpaste in Kontakt gebracht. Somit befindet sich zwischen den zu verbindenden Bauelementen eine Schicht erfindungsgemäße Metallpaste.

Die Nassschichtdicke der erfindungsgemäßen Metallpaste zwischen den zu verbindenden Bauelementen liegt vorzugsweise im Bereich von 20 bis 150 µm. Unter Nassschichtdicke wird hier der Abstand zwischen den sich gegenüberliegenden Kontaktflächen der zu verbindenden Bauelemente vor einem gegebenenfalls stattfindenden Trocknen und vor dem Sintern verstanden. Die bevorzugte Nassschichtdicke ist abhängig vom gewählten Verfahren zum Auftragen der Metallpaste. Wird die Metallpaste beispielsweise mittels Siebdruckverfahren aufgetragen, dann kann eine Nassschichtdicke von 20 bis 50 µm bevorzugt sein. Erfolgt die Auftragung der Metallpaste mittels Schablonendruck, dann kann die bevorzugte Nassschichtdicke im Bereich von 20 bis 150 µm liegen. Bei der Dispenstechnik kann die bevorzugte Nassschichtdicke im Bereich von 20 bis 150 µm liegen.

Optional wird vor dem Sintern ein Trocknungsschritt durchgeführt, d.h. eine Entfernung von organischem Lösemittel aus der applizierten Metallpaste. Gemäß einer bevorzugten Ausführungsform liegt der Anteil an organischem Lösemittel in der Metallpaste nach der Trocknung beispielsweise bei 0 bis 5 Gew.-%, bezogen auf den ursprünglichen Anteil an organischem Lösemittel in der erfindungsgemäßen Metallpaste, d.h. applikationsbereiten Metallpaste. Mit anderen Worten, gemäß dieser bevorzugten Ausführungsform werden beispielsweise 95 bis 100 Gew.-% des oder der ursprünglich in der erfindungsgemäßen Metallpaste enthaltenen organischen Lösemittel bei der Trocknung entfernt.

Findet ein Trocknen statt, so kann die Trocknung im Falle des drucklosen Sinterns nach der Herstellung der Anordnung, also nach der Kontaktierung der zu verbindenden Bauelemente erfolgen. Im Falle des Drucksinterns kann die Trocknung auch nach dem Auftragen der Metallpaste auf die wenigstens eine Oberfläche des Bauelements und vor der Kontaktierung mit dem zu verbindenden Bauelement erfolgen.

Die Trocknungstemperatur liegt vorzugsweise im Bereich von 80 bis 150 °C. Übliche Trocknungszeiten liegen im Bereich von 5 bis 45 Minuten.

Die Anordnung aus den wenigstens zwei Bauelementen und zwischen den Bauelementen befindlicher und getrockneter Metallpaste wird schließlich dem eigentlichen Sinterprozess unterworfen.

Das eigentliche Sintern erfolgt bei einer Temperatur im Bereich von beispielsweise >250 bis 350°C, bevorzugt >280 bis 350 °C, insbesondere 290 bis 350°C, entweder als druckloser Prozess oder als Drucksintern.

Beim Drucksintern liegt der Pressdruck beispielsweise im Bereich von 1 bis 30 MPa und bevorzugt im Bereich von 5 bis 25 MPa, speziell 10 bis 15 MPa.

Die Sinterzeit liegt beispielsweise im Bereich von 1 bis 90 Minuten, beim Drucksintern beispielsweise im Bereich von 1 bis 10 Minuten, beim Drucklossintern beispielsweise im Bereich von 30 bis 90 Minuten.

Der Sinterprozess erfolgt in einer sauerstofffreien Atmosphäre. Unter sauerstofffreier Atmosphäre ist im Rahmen der Erfindung eine Atmosphäre zu verstehen, deren Sauerstoffgehalt nicht mehr als 50 ppm, vorzugsweise nicht mehr als 10 ppm beträgt. Dabei kann es sich um eine reduzierende Atmosphäre (beispielsweise Argon oder Stickstoff mit einer Beimischung von beispielsweise Wasserstoff oder Ameisensäure) handeln. Die Verwendung einer reduzierenden Atmosphäre ist jedoch nicht notwendig, vielmehr kann stattdessen zweckmäßig in einer Inertgasatmosphäre (beispielsweise Stickstoff, Argon, Kohlendioxid) gearbeitet werden.

Das Sintern wird in einer herkömmlichen, zum Sintern geeigneten Vorrichtung durchgeführt, in der sich die vorstehend beschriebenen Prozessparameter einstellen lassen.

### Beispiele:

### 1. Herstellung von Kupferpasten:

Zunächst wurden jeweils Pasten P1-P4 (Vergleichspasten) und P5-P9 (jeweils erfindungsgemäß) mit vergleichbarer Verarbeitungsviskosität durch Vermischen organisch gecoateter Kupferflakes mit α-Terpineol hergestellt.

| **Vergleichspasten** | **P1** | **P2** | **P3** | **P4** | |
|---|---|---|---|---|---|
| Organisch gecoatete Kupferflakes [Gew.-%] | 73 | 75 | 67 | 83 | |
| α-Terpineol [Gew.-%] | 27 | 25 | 33 | 17 | |
| Organisches Coating | Stearinsäure | Stearinsäure | Stearinsäure | Stearinsäure | |
| Spezifische Oberfläche der organisch gecoateten Kupferflakes [m²/g] | 1,88 | 3,31 | 1,24 | 1,01 | |
| Gesamtsauerstoffgehalt der organisch gecoateten Kupferflakes [Gew.-%] | 2,8626 | 4,9282 | 4,04 | 0,45 | |
| Gesamtkohlenstoff : Gesamtsauerstoff-Gewichtsverhältnis der organisch gecoateten Kupferflakes | 0,15 | 0,22 | 0,13 | 1,52 | |

| **Erfindungsgemäße Pasten** | **P5** | **P6** | **P7** | **P8** | **P9** |
|---|---|---|---|---|---|
| Organisch gecoatete Kupferflakes [Gew.-%] | 75 | 75 | 75 | 75 | 75 |
| α-Terpineol [Gew.-%] | 25 | 25 | 25 | 25 | 25 |
| Organisches Coating | Stearinsäure | Stearinsäure | Stearinsäure | Stearinsäure | Stearinsäure |
| Spezifische Oberfläche der organisch gecoateten Kupferflakes [m²/g] | 3,31 | 2,04 | 2,31 | 3,70 | 1,95 |
| Gesamtsauerstoffgehalt der organisch gecoateten Kupferflakes [Gew.-%] | 3,07 | 2,72 | 3,25 | 3,82 | 2,83 |
| Gesamtkohlenstoff : Gesamtsauerstoff-Gewichtsverhältnis der organisch gecoateten Kupferflakes | 0,37 | 0,44 | 0,33 | 0,39 | 0,36 |

### 2. Applikation und Sintern der Kupferpasten:

Die jeweilige Kupferpaste wurde mittels Schablonendruck auf ein DCB-Substrat mit einer Nassschichtdicke von 100 µm und einer Fläche von 4 mm · 4 mm vollflächig appliziert. Anschließend wurde im Umlufttrockenofen bei 80 °C 30 min lang getrocknet und so vom α-Terpineol befreit. Auf die getrockneten Pasten wurden Siliziumchips mit ihrer Kontaktfläche von 4 mm · 4 mm bei einer Temperatur von 25 °C aufgesetzt. Die Siliziumchips wurden bei 15 MPa und 300 °C 3 min lang in einer Stickstoffatmosphäre erhitzt, um die Bauelemente mit dem DCB zu versintern.

Nach dem Sintern wurde die Haftung über die Scherfestigkeit bestimmt. Dabei wurden die Siliziumchips mit einem Schermeißel bei einer Geschwindigkeit von 0,3 mm/s bei Raumtemperatur abgeschert. Die Kraft wurde mittels einer Kraftmessdose aufgenommen (Gerät Nordson DAGE 4000Plus der Firma Nordson DAGE, Deutschland).

**Nachfolgende Tabelle zeigt die erhaltenen Messergebnisse:**

| Paste | Schertest [N/mm²] *Ziel-Scherfestigkeit: ≥ 20 N/mm² |
|---|---|
| P1 | 5,50 |
| P2 | 8,76 |
| P3 | 0,59 |
| P4 | 13,13 |
| P5 | 46,10 |
| P6 | 49,90 |
| P7 | 25,89 |
| P8 | 51,01 |
| P9 | 41,20 |

## Patentansprüche

1. Metallpaste, umfassend (A) 65 bis 85 Gew.-% Metallpartikel und (B) 10 bis 35 Gew.-% organisches Lösemittel, wobei die Metallpartikel (A) zu 70 bis 100 Gew.-% aus organisch gecoateten Kupferflakes mit einer spezifischen Oberfläche im Bereich von 1,9 bis 3,7 m²/g, einem Gesamtsauerstoffgehalt im Bereich von 2 bis 4 Gew.-% und einem Gesamtkohlenstoff : Gesamtsauerstoff-Gewichtsverhältnis im Bereich von 0,25 bis 0,9 bestehen.

2. Metallpaste nach Anspruch 1, wobei es sich bei den organisch gecoateten Kupferflakes um 40 bis 200 nm dünne Plättchen mit einem Aspektverhältnis im Bereich von ≥ 6 : 1 bis zu 375 : 1 handelt.

3. Metallpaste nach Anspruch 1 oder 2, wobei die organisch gecoateten Kupferflakes eine mittlere Teilchengröße (d50) im Bereich von 1 bis 15 µm aufweisen.

4. Metallpaste nach einem der vorhergehenden Ansprüche, wobei das organische Coating eine festhaftende und bei Normalbedingungen (20°C, Atmosphärendruck) nichtflüchtige Schicht auf der Kupferflakeoberfläche bildet.

5. Metallpaste nach einem der vorhergehenden Ansprüche, wobei das organische Coating wenigstens eine Art von organischen Coatingverbindungen umfasst.

6. Metallpaste nach einem der vorhergehenden Ansprüche, wobei der Anteil des organischen Coatings 2 bis 5 Gew.-%, bezogen auf das Gewicht der organisch gecoateten Kupferflakes, beträgt.

7. Metallpaste nach einem der vorhergehenden Ansprüche, wobei der Coatinggrad 0,004 bis 0,006 g/m² beträgt.

8. Metallpaste nach einem der vorhergehenden Ansprüche, wobei es sich bei den organisch gecoateten Kupferflakes um Flakes aus reinem Kupfer und/oder um Flakes aus aus Legierungen von Kupfer mit bis zu 30 Gew.-% mindestens eines Legierungsmetalls handelt.

9. Metallpaste nach Anspruch 8, wobei das mindestens eine Legierungsmetall ausgewählt ist aus der Gruppe bestehend aus Silber, Gold, Nickel, Palladium, Platin, Zink und Aluminium.

10. Metallpaste nach einem der vorhergehenden Ansprüche, enthaltend 0 bis 15 Gew.-% mindestens eines Additivs (C) ausgewählt aus der Gruppe bestehend aus Metallprecursoren, Sinterhilfsmitteln, Dispergiermitteln, Tensiden, Entschäumern, Bindemitteln, Polymeren und viskositätssteuernden Mitteln.

11. Verfahren zum Verbinden von Bauelementen, bei dem man eine Sandwichanordnung, die wenigstens ein Bauelement 1, ein Bauelement 2 und eine zwischen sinterzuverbindenden Kontaktflächen von Bauelement 1 und Bauelement 2 befindliche Metallpaste nach einem der Ansprüche 1 bis 10 aufweist, bereitstellt und sintert.

12. Verfahren nach Anspruch 11, wobei mindestens eine der sinterzuverbindenden Kontaktflächen eine Kontaktfläche aus Kupfer oder aus metallisiertem Kupfer ist.

13. Verfahren nach Anspruch 11 oder 12, wobei man unter Druckanwendung oder drucklos sintert.

14. Verfahren nach einem der Ansprüche 11 bis 13, wobei es sich bei den Bauelementen um in der Elektronik verwendete Teile handelt.

15. Verfahren nach einem der Ansprüche 11 bis 14, wobei das Sintern bei einer Temperatur von >250 bis 350°C erfolgt.

## Claims

1. A metal paste, comprising (A) 65 to 85% by weight of metal particles and (B) 10 to 35% by weight of organic solvent, wherein 70 to 100% by weight of the metal particles (A) consist of organically coated copper flakes comprising a specific surface in the range of 1.9 to 3.7 m²/g, a total oxygen content in the range of 2 to 4% by weight, and a total carbon to total oxygen weight ratio in the range of 0.25 to 0.9.

2. The metal paste according to claim 1, wherein the organically coated copper flakes are 40 to 200 nm thin platelets with an aspect ratio in the range of ≥ 6 : 1 to 375 : 1.

3. The metal paste according to claim 1 or 2, wherein the organically coated copper flakes have an average particle size (d50) in the range of 1 to 15 µm.

4. The metal paste according to any one of the preceding claims, wherein the organic coating forms a firmly adhering layer, which is non-volatile under normal conditions (20°C, atmospheric pressure), on the copper flake surface.

5. The metal paste according to any one of the preceding claims, wherein the organic coating comprises at least one type of organic coating compounds.

6. The metal paste according to any one of the preceding claims, wherein the percentage of the organic coating is 2 to 5% by weight, based on the weight of the organically coated copper flakes.

7. The metal paste according to any one of the preceding claims, wherein the coating level is 0.004 to 0.006 g/m².

8. The metal paste according to any one of the preceding claims, wherein the organically coated copper flakes are flakes of pure copper and/or flakes of alloys of copper with up to 30% by weight of at least one alloy metal.

9. The metal paste according to claim 8, wherein the at least one alloy metal is selected from the group consisting of silver, gold, nickel, palladium, platinum, zinc, and aluminium.

10. The metal paste according to any one of the preceding claims, containing 0 to 15% by weight of at least one additive (C) selected from the group consisting of metal precursors, sintering aids, dispersants, surfactants, defoamers, binders, polymers, and viscosity-controlling agents.

11. A method for joining components, in the case of which a sandwich arrangement, which has at least one component 1, a component 2, and a metal paste according to any one of claims 1 to 10, which is located between contact surfaces, which are to be sinter-bonded, of component 1 and component 2, is provided and sintered.

12. The method according to claim 11, wherein at least one of the contact surfaces, which are to be sinter-bonded, is a contact surface of copper or of metallised copper.

13. The method according to claim 11 or 12, wherein sintering is performed by applying pressure or without pressure.

14. The method according to any one of claims 11 to 13, wherein the components are parts used in electronics.

15. The method according to any one of claims 11 to 14, wherein the sintering takes place at a temperature of >250 to 350^{~}C.

## Revendications

1. Pâte de métal comprenant (A) de 65 à 85% en poids de particules métalliques et (B) de 10 à 35% en poids de solvant organique, les particules métalliques (A) se composant de 70 à 100% en poids de flocons de cuivre dotés d'un revêtement organique, avec une surface spécifique comprise entre 1,9 et 3,7 m²/g, une teneur globale en oxygène comprise entre 2 à 4% en poids et un rapport en poids entre le carbone total et l'oxygène total compris entre 0,25 et 0,9.

2. Pâte de métal conformément à la revendication 1, les flocons de cuivre dotés d'un revêtement organique étant des petites plaquettes de 40 à 200 nm avec un rapport d'aspect ≥ 6 : 1 jusqu'à 375 : 1.

3. Pâte de métal conformément à la revendication 1 ou 2, les flocons de cuivre dotés d'un revêtement organique présentant une taille de particule moyenne (d50), comprise entre 1 et 15 µm.

4. Pâte de métal conformément à l'une des revendications précédentes, le revêtement organique formant une couche adhérente et non volatile dans des conditions normales (20°C, pression atmosphérique) à la surface des flocons de cuivre.

5. Pâte de métal conformément à l'une des revendications précédentes, le revêtement organique comprenant au moins un type de composés de revêtement organique.

6. Pâte de métal conformément à l'une des revendications précédentes, le taux de revêtement organique s'élevant de 2 à 5% en poids par rapport au poids des flocons de cuivre dotés d'un revêtement organique.

7. Pâte de métal conformément à l'une des revendications précédentes, le taux de revêtement étant de 0,004 à 0,006 g/m².

8. Pâte de métal conformément à l'une des revendications précédentes, les flocons de cuivre dotés d'un revêtement organique étant des flocons en cuivre pur et/ou des flocons en alliages de cuivre avec jusqu'à 30% en poids minimum d'un métal d'alliage.

9. Pâte de métal conformément à la revendication 8, au moins un métal d'alliage étant sélectionné dans le groupe composé d'argent, or, nickel, palladium, platine, zinc et aluminium.

10. Pâte de métal conformément à l'une des revendications précédentes, contenant de 0 à 15% en poids au moins d'un additif (C) sélectionné dans le groupe composé de précurseurs de métal, adjuvants de frittage, agents dispersants, tensioactifs, agents anti-mousse, liants, polymères et agents de contrôle de la viscosité.

11. Procédé de liaison d'éléments de construction, dans lequel une disposition sandwich qui présente au moins un élément de construction 1, un élément de construction 2 et une pâte de métal se trouvant entre les surfaces de contact de l'élément de construction 1 et l'élément de construction 2, à lier par frittage, conformément à l'une des revendications 1 à 10, est mise à disposition et frittée.

12. Procédé conformément à la revendication 11, dans lequel au moins l'une des surfaces de contact à lier par frittage est une surface de contact en cuivre ou en cuivre métallisé.

13. Procédé conformément à la revendication 11 ou 12, dans lequel le frittage est réalisé sous l'application d'une pression ou sans pression.

14. Procédé conformément à l'une des revendications 11 à 13, dans lequel les éléments de construction sont des pièces utilisées en électronique.

15. Procédé conformément à l'une des revendications 11 à 14, dans lequel le frittage est réalisé à une température > 250 jusqu'à 350°C.
